# EUROPÄISCHE PATENTSCHRIFT

(11) **EP 0 974 483 B1**
(45) Veröffentlichungstag und Bekanntmachung des Hinweises auf die Patenterteilung: **25.02.2009**
(21) Anmeldenummer: 99113348.9
(22) Anmeldetag: 09.07.1999
(51) Int. Cl.: H02H 7/12, H02H 7/08, H02P 6/00

(54) **Schutzeinrichtung gegen Spannungsrückwirkung permanenterregter elektrischer Antriebe**
Protective device against retroactive voltages from permanently excited electrical drives
Dispostif de protection contre tensions rétroactives d'entraînement électrique à excitation permanente

(30) Priorität: 22.07.1998 DE 29813080 U
(43) Veröffentlichungstag der Anmeldung: 26.01.2000
(73) Patentinhaber: SIEMENS AKTIENGESELLSCHAFT, 80333 München (DE)
(72) Erfinder: Ebert, Rainer, Dipl.-Ing., 09122 Chemnitz (DE); Gehre, Hans-Joachim, Dipl.-Ing., 09119 Chemnitz (DE); Imrich, Franz, Dipl.-Ing., 91058 Erlangen (DE); Fuchsloch, Jürgen, Dipl.-Ing., 91058 Erlangen (DE); Heeg, Dietmar, Dipl.-Ing., 09228 Wittgensdorf (DE)

(56) Entgegenhaltungen:
- EP-A- 0 970 840
- DE-A- 3 817 916
- DE-A- 4 306 307
- PATENT ABSTRACTS OF JAPAN vol. 012, no. 493 (E-697), 22. Dezember 1988 (1988-12-22) & JP 63 206189 A (MATSUSHITA ELECTRIC IND CO LTD), 25. August 1988 (1988-08-25)
- ARTELT V: "SPINDLE-MOTOR PROVIDES QUALITY BOOST" ENGINEERING AND AUTOMATION, SIEMENS AKTIENGESELLSCHAFT, BERLIN, DE, Bd. 19, Nr. 6, 1997, Seiten 8-9, XP000739000 ISSN: 0939-2068

## Beschreibung

Die Erfindung bezieht sich auf eine Schutzeinrichtung gegen Spannungsrückwirkung permanenterregter elektrischer Antriebe, welche zwischen Antriebselektronik und Motor an die Motorphasen geschaltet ist.

Moderne Antriebskonzepte verwenden synchrone Motoren als Arbeitsmaschinen (beispielsweise für numerisch gesteuerte Werkzeugmaschinen und Roboter). Das synchrone Antriebskonzept ermöglicht die Realisierung zahlreicher Vorteile wie geringer Läufererwärmung und dadurch bedingtem geringerem Kühlaufwand sowie genauerer Werkstückbearbeitung. Darüber hinaus wird eine höhere Leistungsdichte im oberen Drehzahlbereich erreicht, woraus kürzere Nebenzeiten resultieren. Weiter wird eine höhere Drehmomentendichte im unteren Drehzahlbereich ermöglicht und dadurch beispielsweise bei Werkzeugmaschinen eine größere Zerspanleistung erreicht.

Die Forderung nach hoher Leistungsdichte bei geringer Motorerwärmung und einer genauen Werkstückbearbeitung hat zum verstärkten Einsatz von synchronpermanenterregten Motoren als Arbeitsmaschinen geführt. Durch eine Vergrößerung der Motor-EMK-Spannung sind bei gleichem Motorvolumen höhere Leistungsdichten möglich (vgl. hierzu Engineering & Automation, Ausgabe 5, 1997, Seite 8 ff.).

Um die hohen Drehzahlen zu erreichen, werden permanenterregte Spindelmotore eingesetzt. Solche Motoren werden im Feldschächbetrieb auf Drehzahlen weit über der Nenndrehzahl betrieben. Im Störfall treten Spannungen an den Motorklemmen vom vielfachen der Nennspannung auf. Ein solcher Störfall oder gestörter Betrieb kann beispielsweise durch den Ausfall oder Stillsetzen der Regelung des Antriebes, einen Netzausfall, ein NOT-AUS, Leitungsunterbrechung usw. ausgelöst werden.

Kommt es zum Störfall im hohen Drehzahlbereich, so schaltet die Antriebsregelung und damit die Feldschwächung des Motors ab. Der Antrieb ist daraufhin nicht in der Lage, die Energie in das elektrische Netz zurückzuspeisen. Die Klemmenspannung am Motor kann bis auf die Leerlaufspannung >2 kV des Motors ansteigen. Als Folge tritt eine Umformatierung der Zwischenkreiskondensatoren auf und die Sperrspannung der Stromrichterventile eines Umrichters (z.B IGBT-Transistoren) überschritten werden. Dies führt zwangsläufig zur Zerstörung des Antriebes. Werden keine konstruktiven Maßnahmen getroffen, die verhindern, daß ein Schluß mit berührbaren Elektronikspannungen (niedervoltseitig) auftreten kann, so entsteht zusätzlich ein Sicherheitsrisiko für das Bedienpersonal.

Aus der JP 63206189 ist eine Schutzeinrichtung gegen Spannungsrückwirkung für permanenterregte elektrische Antriebe bekannt. Hierbei wird ein eindeutiges Signal durch Gleichrichtung einer auftretenden Überspannung generiert zur Signalisierung einer schädlichen Spannungsrückwirkung. Die Schutzeinrichtung wird aus der gleichgerichteten Phasenspannung mit Energie versorgt. Weiterhin sind Mittel zum Kurzschluss der Motorklemmspannung sowie ein Widerstand als Bremsmittel vorgesehen.

Die DE 38 17 916 A1 zeigt eine Steuervorrichtung für bürstenlose Motoren, wobei eine Gegen-EMK des Motors erfasst wird und an einem PLL-Kreis anliegt. Jede Abnormalität im Zustand des Motors verursacht eine plötzliche und wesentliche Änderung in Größe und Phase der Gegen-EMK. Ein entsprechendes internes Signal wird dazu verwendet, um bei Überschreitung eines Grenzwerts den Betrieb des Motorsteuer-Wechselrichters zu stoppen.

Aufgabe einer Schutzeinrichtung gegen Spannungsrückwirkung permanenterregter elektrischer Antriebe ist es, die im Vorangehenden geschilderten Gefahren für Motor und Bedienpersonal sicher zu vermeiden. Diese Aufgabe wird gemäß der EP 0 970 840 A2 durch eine Schutzeinrichtung gelöst, welche dahingehend weitergebildet ist, daß
- ein Mittel zur Bildung eines eindeutigen Signals durch Gleichrichtung einer auftretenden Überspannung vorgesehen ist, welches das Vorliegen einer schädlichen Spannungsrückwirkung signalisiert,
- die Schutzeinrichtung aus der gleichgerichteten auftretenden Phasenspannung mit Energie (Uversorg) versorgt wird,
- ein Mittel zum Kurzschluß der Motorklemmspannung vorgesehen ist, welches durch das eindeutige Signal bei Vorliegen einer schädlichen Spannungsrückwirkung ausgelöst wird, wobei ein Durchlaßwiderstand der Gleichrichtmittel und/oder des Kurzschlußmittels als Bremslast wirkt.

Die zulässige Zwischenkreisspannung und notwendige Auslösespannungen für den Bremsbetrieb liegen eng beieinander. Die Schutzeinrichtung gemäß der vorliegenden Erfindung ermöglicht eine hohe Genauigkeit bei der Einstellung der Spannungsschwelle. Darüber hinaus wird eine sichere Abschaltung des Antriebes bei Überlastung der Schutzeinrichtung durch die umgesetzte Bremsenergie gewährleistet. Die Schutzeinrichtung benötigt darüber hinaus keine Hilfsenergie und kann dadurch einfach zwischen Motor und Antriebsregelung eingefügt werden.

Am Einsatz synchron-permanenterregter Motoren mit vergrößerter Motor-EMK-Spannung können im Störfall Leerlaufspannungen bis zu 5 kV oder größer an den Motorklemmen auftreten. Ein einstufiger Schutz, wie im Vorangehenden vorgestellt, ist dann womöglich nicht mehr ausreichend. Aufgrund der hohen Motorklemmenspannung kann nicht gewährleistet werden, daß bei Ausfall der Schutzeinrichtung die Zwischenkreiskapazität des Antriebes die Rotationsenergie des Motors aufnimmt. Neben der Zerstörung des Motors ist ein Überschlag der gefährlichen Motorklemmenspannung zwischen Stromkreisen der Arbeitsmaschine möglich. Darüber hinaus besteht ein erhebliches Sicherheitsrisiko für das Bedienpersonal.

Diese Aufgabe wird erfindungsgemäß gelöst durch eine Schutzeinrichtung gemäß dem unabhängigen Anspruch 1. Weitere Ausgestaltungen der Erfindung sind Gegenstand der abhängigen Patentansprüche 2 bis 10.

Die vorteilhafte Ausgestaltung der redundanten Schutzeinrichtung gemäß Anspruch 8 ermöglicht eine besonders gute Vermeidung eines Überschlags der gefährlichen Motorklemmenspannung zwischen Stromkreisen der Antriebsmaschine.

Weitere Vorteile der vorteilhaften Ausgestaltung gemäß Anspruch 10 ergeben sich durch die vorliegende Erfindung eine Verhinderung der Thyristorzündung während des Normalbetriebes durch das eindeutige Signal zur Anzeige einer auftretenden Überspannung bzw. für gestörten und ungestörten Betrieb. Durch dieses Signal wird das Zünden des Thyristors der Schutzeinrichtung während des normalen Betriebes des elektrischen Antriebes gesperrt.

Weitere Vorteile und Details der vorliegenden Erfindung ergeben sich anhand der nun folgenden Schilderung eines vorteilhaften Ausführungsbeispieles und in Verbindung mit den Figuren. Es zeigen:
- FIG 1: eine schematische Darstellung eines Systems mit permanenterregtem Motor und einer Schutzeinrichtung gemäß der EP 0 970 840 A2,
- FIG2: ein Blockschaltbild dieser Schutzeinrichtung gemäß der vorliegenden Erfindung, und
- FIG 3A, 3B: eine schematische Darstellung eines Systems mit synchron-permanenterregtem Motor und einer redundanten Schutzeinrichtung gemäß der vorliegenden Erfindung.

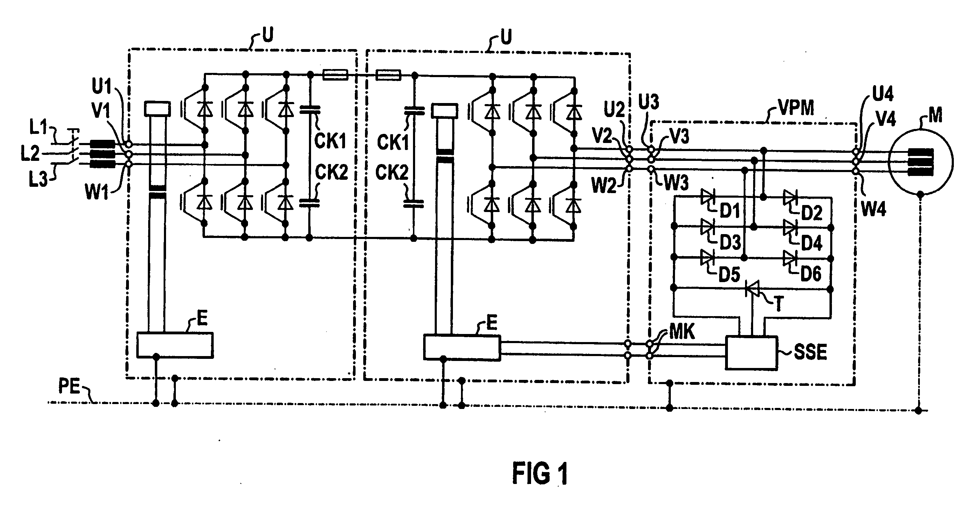

In der Darstellung nach FIG 1 ist eine schematische Darstellung des Systems mit permanenterregtem Motor M und einer Schutzeinrichtung gegen Spannungsrückwirkung VPM gezeigt. Auf der linken Seite ist ein Drehstrom-Netz mit den Netzphasen LI, L2 und L3 gezeigt, welche über einen Hauptschalter zu einem Umrichter U bestehend aus einem Gleichrichter, dem Spannungszwischenkreis und einem darauffolgenden Wechselsrichter mit Stromrichterventilen geführt wird. Ausgangsseitig stellt der Umrichter U die Phasenspannungen U2, V2 und W2 bereit. Die Schutzeinrichtung VPM ist zwischen den Umrichter U und den Motor M an die Netzphasen U3, V3 und W3 geschaltet. Die Schutzeinrichtung weist eine Drehstrom-Diodenbrücke aus Dioden D1 bis D6 auf. In den Ausgang der Diodenbrücke ist ein Thyristor T geschaltet und parallel dazu eine Spannungsschutzelektronik SSE. Ausgehend von der Spannungsschutzeleketronik SSE ist die Schutzeinrichtung VPM über einen Meldekontakt MK mit dem Umrichter U elektrisch verbunden. Der Umrichter U weist dazu eine Elektronik E zur Aktivierung/Deaktivierung der Stromrichterventile des Wechselrichters für die Antriebsregelung auf.

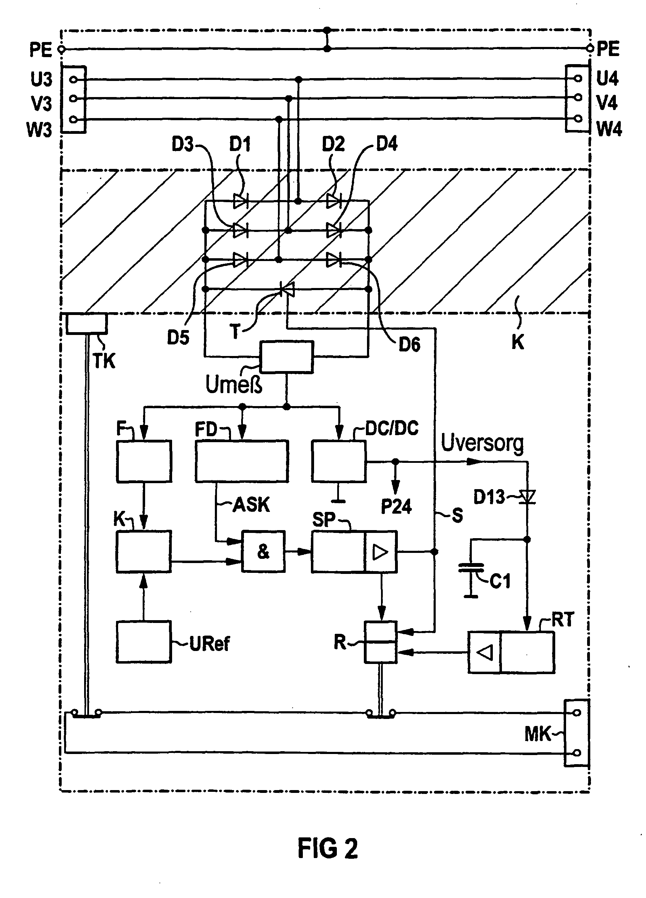

In der Darstellung gemäß FIG 2 ist ein Blockschaltbild der in FIG 1 lediglich schematisch dargestellten Schutzeinrichtung VPM gezeigt. Die Schutzeinrichtung ist zwischen den Umrichter U und den Motor M geschaltet. Die Schutzeinrichtung mißt die auftretende Motorklemmspannung an den Klemmen U4, V4 und W4 über die bereits geschilderte Drehstrom-Diodenbrücke mit den Dioden D1 bis D6. Die durch die Gleichrichtung gebildete Meßspannung Umess wird zu einem Filter F geführt und steuert auf einer festgelegten Spannungshöhe über das Triggersignal eines Komparators K, welcher durch eine Referenzspannung URef beaufschlagt ist, die nachfolgende Elektronik an. Eine Erkennungsschaltung - im Ausführungsbeispiel ein Fehlerdiskriminator FD - bildet ein Signal für den gestörten Betrieb und aktiviert ein UND-Gatter & zur Ansteuerung und Abspeicherung des Transistorzündsignales. Der Fehlerdiskriminator FD dient einer höheren Störfestigkeit. Der Schutz vor zu hohen Klemmspannungen zwischen Motor M und Antriebsregelung mit dem Umrichter U erfolgt durch Zünden des der Drehstrom-Diodenbrücke D1 bis D6 nachgeschalteten Thyristors T und den dadurch verursachten Kurzschluß aller Motoranschlüsse über die Drehstrom-Diodenbrücke.

Der Durchlaßwiderstand von Diodenbrücke D1 bis D6 und Thyristor T fungiert in dieser Anordnung als Bremslast. Der Zündimpuls des Thyristors T setzt ein Freigaberelais R in einen bistabilen Zustand. Dadurch wird die Antriebsregelung über den bereits geschilderten Meldekontakt MK bis zur Beendigung des Bremsvorganges des Motors unterbrochen, indem die bereits im Zusammenhang mit FIG 1 geschilderte Leitungsschleife des Meldekontaktes MK über das Relais R unterbrochen wird. Ein Rücksetzen des Freigaberelais R erfolgt über eine RESET-Triggerschaltung RT.

Die Stromversorgung Uversorg bzw. P24 der Schutzeinrichtung mit den entsprechenden Komponenten Filter F, Fehlerdiskriminator ED, Spannungskomparator K und Speicher SP sowie der RESET-Triggerschaltung RT wird mittels eines DC/DC-Wandlers aus den vom Motor ausgegebenen Spannungsimpulsen gespeist, welche durch die Gleichrichtung durch die Drehstrom-Diodenbrücke D1 bis D6 in Form der Spannung Umeß bereitsteht. Dadurch ist die Schutzeinrichtung autark und benötigt keine zusätzliche Hilfsenergie.

Die Dioden D1 bis D6 der Drehstrom-Diodenbrücke sowie der Thyristor T sind mit einem Kühlkörper K thermisch verbunden. Durch die in der Schutzeinrichtung VPM umgesetzte Bremsenergie erwärmt sich dieser Kühlkörper K. Ein Thermokontakt TK, welcher mit dem Kühlkörper K verbunden ist, schützt die Leistungsbauteile Thyristor T und Diodenbrücke D1 bis D6 vor Überhitzung durch Abschalten des Motors über den Meldekontakt MK und verhindert auf diese Weise weitere Bremszüge. Der Thermokontakt TK ist in Serie zum Freigaberelais R in die Leitungsschleife des Meldekontaktes MK geschleift.

Durch ein Einbeziehen der Spannungsbegrenzung durch die Zwischenkreiskondensatoren CK1 und CK2 (zu erkennen im Umrichter U in FIG 1) in das Sicherheitskonzept der Schutzeinrichtung durch eine feste Kopplung zwischen Zwischenkreiskondensatoren CK1 und CK2 sowie Motorklemmen wird bei einem Ausfall der Schutzeinrichtung VPM die auftretende zu hohe Motorklemmspannung für einen begrenzten Zeitraum von ca. 2 Minuten auf die Kondensator-Formatierungsspannung begrenzt.

Die Konstruktion ist so ausgeführt, daß bei Anschluß der Schutzeinrichtung VPM eine Reihenschaltung von Antriebsregelung und Umrichter U, der Schutzeinrichtung VPM selbst und dem Motor M zwingend entsteht. Leitungsunterbrechungen zwischen Motor M und Schutzeinrichtung VPM führen zu Funktionsbeeinträchtigungen und dadurch zur Fehlererkennung. Bei einer sternpunktförmigen Verdrahtung vom Motor M und der Schutzeinrichtung VPM sowie Antriebsregelung wäre eine Fehlererkennung nicht in jedem Fall gegeben.

Im folgenden soll nun die Funktion der Schutzeinrichtung VPM im ungestörten Betrieb näher erläutert werden.

Die pulsweitenmodulierten Signale des Umrichters U gelangen über die Schutzeinrichtung VPM an den Motor M. In der Schutzeinrichtung VPM wird durch die Phasengleichrichterbrücke mit den Dioden D1 bis D6 das Meßsignal Umeß gebildet. Dieses Meßsignal besteht aus Rechteckimpulsen, die entsprechend des geforderten Leistungsbedarfes des Motors M in der Impulsweite variieren. Die Rechteckimpulse entstehen durch die große Sperrverzögerungszeit und das Fehlen eines Kondensators am Ausgang der Phasengleichrichterbrücke. Dieser Effekt wird im nachfolgenden Fehlerdiskriminiator FD für die Erkennung eines gestörten Betriebes ausgenutzt.

Die maximale Impulsperiode Tmeß beträcht 3/2 der Pulsweitenmodulationsfrequenz f_{PWM}. Bei einer minimalen Frequenz f_{PWM} = 3,2 kHz ist die maximale Impulsperiode Tmeß gleich 3/(2 x 3,2 kHz) = 0,47 mmsec. Der Fehlerdiskriminator integriert diese Zeit und bildet das Signal ASK zum Aufruf des Spannungskomparators K. Für den Fall eines ungestörten Betriebes sperrt dieses Signal. Ein Auslösen des Thyristors T und ein Kurzschluß der Phasensignale U, V, W wird dadurch verhindert.

Als zusätzliche Verknüpfung dient der Spannungskomparator K. Der Komparator K mißt die Spannungsimpulsehöhe über das Filter F. Beträgt die maximale Amplitude von der gleichgerichteten Spannung Umeß < 830 V ± 1%, so wird eine Zündung des Thyristors T und damit verbunden ein Kurzschluß der Motorklemmen durch die UND-Verknüpfung des UND-Gatters & gesperrt. Der Ausgang der UND-Verknüpfung bleibt somit inaktiv. Die nachgeschalteten Schaltungsteile werden daher nicht aktiviert und der Meldekontakt MK, angesteuert über das Freigaberelais R, bleibt ebenfalls geschlossen.

Der DC/DC-Wandler, welcher über Umeß versorgt wird, bildet die Stromversorgung der Schutzeinrichtung VPM. Die dabei gebildete Spannung P24 beträgt beispielsweise +24V.

Dieser geschilderte Zustand gewährleistet den normalen Betrieb zwischen Antriebsregelung und Motor M. Für den Fall, daß Umeß > = 830V ± 1% Spitze erreicht und die maximale Impulsperiode Tmeß > 0,5 mmsec wird, kommt es zur Betriebsart gestörter Betrieb.

Der gestörte Betrieb, welcher im folgenden näher erläutert werden soll, wird aktiv durch das Auftreten eines der eingangs genannten Störfälle (Ausfall oder Stillsitzen der Regelung des Antriebes, Netzausfall, Notaus, Leitungsunterbrechung etc.). Die Regelung des Antriebes ist somit ausgefallen oder stillgesetzt. Der Fehlerdiskriminator FD ruft den Spannungskomparator K auf. Die nachfolgende Speicher- und Treiberschaltung SP zündet den Thyristor T über das Signal S und setzt das Freigaberelais R. Die Phasensignale U,V, W werden durch den gezündeten Thyristor T kurzgeschlossen und die interne Stromversorgung abgeschaltet. Der Meldekontakt MK unterbricht das Signal "Freigabe Antrieb" und verhindert ein erneutes Zuschalten der Arbeitsmaschine.

Grund hierfür ist, daß ein Rücksetzen des Thyristors T erst nach Beendigung des Bremsvorganges möglich ist. Der Thyristor T bleibt gezündet bis zur Motordrehzahl "Null". Damit die RESET-Triggerschaltung RT zur Rücksetzung des Freigaberelais R noch mit Energie versorgt werden kann, ist zwischen den DC/DC-Wandler und die RESET-Triggerelektronik RT eine Diode D13 in Flußrichtung geschaltet, deren Kathode über einen Kondensator C1 an Masse geführt ist. Die im Kondensator C1 gespeicherte Energie wird über den Komparator des RESET-Triggers abgebaut. Bei einem Kondensator C1 mit 6,8 mmF ist nach ca. 2,5 Minuten die Triggerschwelle von 13 V DC erreicht und das Relais R wird durch die im Kondensator C1 gespeicherte Restenergie zurückgesetzt. Die Regelung des Antriebes wird wieder freigeschaltet durch den geschlossenen Meldekontakt 10 MK.

Der Thermokontakt TK mißt die Kühlkörpertemperatur des Kühlkörpers K zum Schutz vor Überlastung und unterbricht bei einer Temperatur von beispielsweise > 8°C den Meldekontakt MK der Schutzeinrichtung VPM. Ein Zuschalten erfolgt wieder bei einer Temperatur von beispielsweise < 60°C.

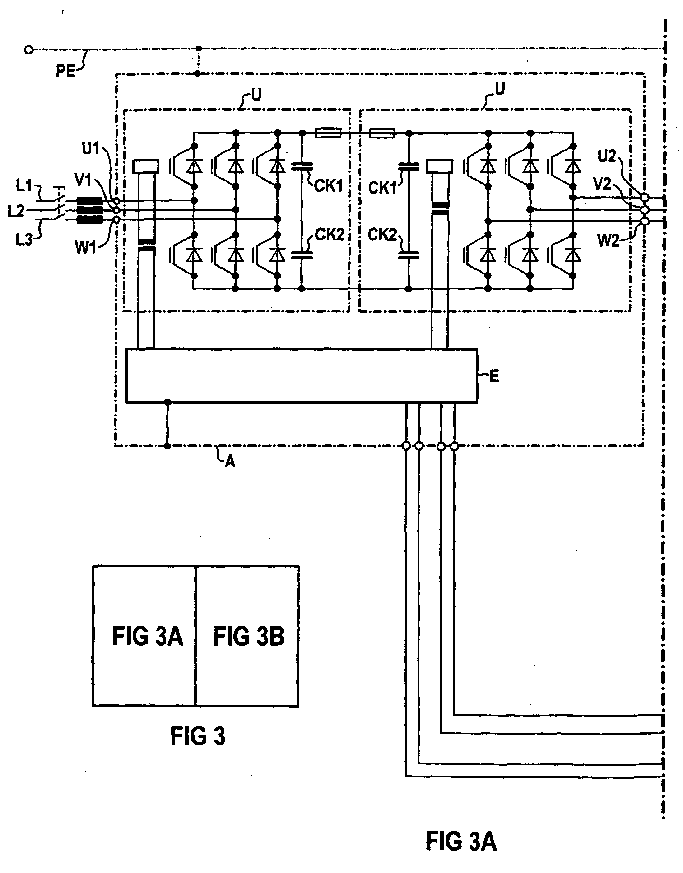

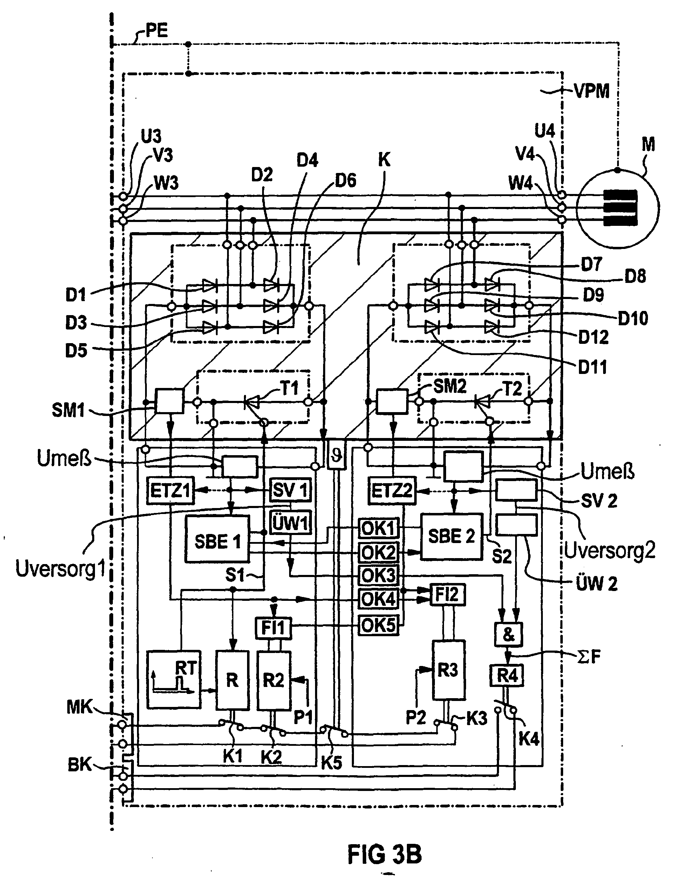

In der Darstellung gemäß den Figuren 3A und 3B ist eine schematische Darstellung eines Systems mit synchron-permanenterregtem Motor M und einer erfindungegemäßen redundanten Schutzeinrichtung gegen Spannungsrückwirkung gezeigt. Gleiche Elemente sind dabei mit gleichen Bezugszeichen wie in den Figuren 1 und 2 gekennzeichnet. Umrichter U und Elektronik E entsprechen der bereits im Zusammenhang mit FIG 1 geschilderten Anordnung. Unterschiedlich ist jedoch die Schutzeinrichtung selbst ausgeprägt, welche zweistufig redundant ausgeführt ist. Jede der beiden Stufen ist in der Lage, die hohen Motorklemmenspannungen kurzzuschließen, wozu jeweils ein Kurzschlußmittel in Form eines Thyristors T1 und T2 vorgesehen ist. Um Bauelementeausfälle in der Schutzeinrichtung VPM zu erkennen, ist ein Schaltungskomplex bestehend aus Komponenten ETZ1 bzw. ETZ2, OK4 bzw. OK5, F11 bzw. F12 sowie Relais R2 bzw. R3 redundant installiert. Die beiden redundanten Stufen der Schutzeinrichtung VPM sind ebenfalls redundant ausgeführt. Ein Auslösen einer der beiden Stufen bedingt die nachfolgende Aktivierung der anderen Stufe. Dies geschieht durch die gegenseitige Verknüpfung der beiden Spannungsbegrenzungselektronik SBE1 und SBE2. Unterschiedliche Ansprechschwellen Utr, welche aufgrund von Bauelementetoleranzen auftreten können, werden durch diese Verknüpfung bzw. gegenseitigen Informationsaustausch ausgeglichen.

Im fehlerfreien Kurzschlußfall setzt die Spannungsbegrenzungselektronik SBE1 das Relais R mit dem Kontakt K1. Als Folge wird der Meldekontakt MK für eine vorbestimmte Zeit t_{R} unterbrochen. Der Rücksetztrigger RT schließt den Kontakt K1 wieder, wie bereits anläßlich von FIG 2 erläutert wurde.

Die Funktionsfähigkeit bzw. Fehlerfreiheit der Schutzeinrichtung VPM wird garantiert durch die Überwachung der Thyristorzündung durch die jeweilige Schaltung ETZ1 und ETZ2. Liegt keine Koinzidenz vor, so besitzen die Ausgänge von ETZ1 und ETZ2 unterschiedliches Spannungspotential. Diese Spannung gelangt über die Filter FI1 und FI2 an die Relais R2 und R3, welche gesetzt werden. Die Filter FI1 und FI2 unterdrücken die Lauf- und Schaltzeiten der Bauelemente. Ein Rücksetzen erfolgt in diesem Fall nicht mehr. Durch die dauerhafte Unterbrechung des Meldekontaktes MK ist der Betrieb des Motors nicht mehr möglich und eine fehlerhafte Schutzeinrichtung VPM muß ausgetauscht werden. Die Anschlüsse P1 und P2 der Relais R2 und R3 dienen einer Prüfmöglichkeit dieser Funktionalität.

Eine Überwachung der Thyristorzündung ist ebenfalls redundant ausgeführt. Die Kontrolle und der Vergleich der Signale erfolgt durch die zweikanalige Ansteuerung der Relais R2 und R3 mit den Kontakten K2 und K3. Die Überprüfung der Funktion der Schutzeinrichtung VPM geschieht in der aktiven und passiven Phase. In der aktiven Phase zündet der Thyristor T1 bzw. T2. Beide Relaisanschlüsse besitzen daher gleiches Potential (z.B. High). Die passive Phase, in der sich die Thyristoren T1 und T2 in Ruhe befinden, hat zur Folge, daß beide Relaisanschlüsse von R2 und R3 beide entgegengesetztes Potential führen (z.B. Low).

Die Spannungsdifferenz ist immer Null an den Relaiseingängen. Die Relaiskontakte K2 und K3 bleiben daher geschlossen. Bei einem Bauelementeausfall bleibt ein Kanal jedoch auf gleichem Potential. Er schaltet nicht mehr. Aufgrund des unterschiedlichen Potentials an den Relaisanschlüssen wird der Meldekontakt MK daher auf die im vorangehenden geschilderte Art und Weise bleibend unterbrochen.

Die Verbindungssignale der beiden Stufen werden über Optokoppler OK1 bis OK5 vom Potential getrennt. Dadurch wird ein Überschlag der gefährlichen Motorklemmenspannung im Fehlerfall zwischen Stromkreisen des Motors und der Antriebselektronik weiter eingeschränkt.

Zusätzliche Sicherheit wird dadurch gewonnen, daß die Möglichkeit besteht, die Spannungen der Stromversorgungen SV1 und SV2 durch eine Überwachungselektronik ÜW1 und ÜW2 abzufragen. Das Summensignal unterbricht über das Relais R4 mit dem Kontakt K4 die Betriebsbereitschaft BK. Ein dadurch ausgelöster Spindelstopp behindert den weiteren Betrieb des synchron permanenterregten Motors.

Die zweistufige redundante Schutzeinrichtung VPM besitzt den Vorteil, daß aufgrund der Redundanz ein Bauelementeausfall sicher erkannt werden kann. Die Zweistufigkeit vergrößert den Bereich der Auslösespannung nicht, da beide Stufen die gleiche Ansprechschwelle besitzen. Durch einen Bauelementeausfall in der Schutzeinrichtung VPM wird der Meldekontakt MK bleibend unterbrochen und der Austausch des fehlerhaften Gerätes zwingend notwendig. Durch die zusätzliche Spannungs- und Fehlerüberwachungsfunktion (wie im Zusammenhang mit der Figur 2 näher erläutert) wird die Sicherheit zusätzlich erhöht. Auch bei einem fehlerhaften Relais R2 oder R3 wird ein Ausfall in einer Stromversorgung sicher erkannt, da im Kurzschlußfall nur eine Stufe den entsprechenden zugeordneten Thyristor T1 oder T2 zündet, wodurch die Koinzidenz der Ausgänge von ETZ1 und ETZ2 nicht mehr gegeben ist. Dadurch können hohe Leerlaufklemmenspannungen des Motors M im Fehlerfall kurzgeschlossen werden und dabei die notwendigen Sicherheitskriterien erfüllt werden.

Im folgenden soll der ungestörte Betrieb der zweistufigen, redundanten Schutzeinrichtung VPM näher erläutert werden. Die Schutzeinrichtung VPM mißt in den Stufen 1 und 2 die auftretende Motorklemmenspannung Umeß in der jeweiligen Spannungsbegrenzungselektronik SBE1 und SBE2. Da die Spannungshöhe <Utr beträgt, erfolgt keine Zündung der Thyristoren T1 und T2. Der Meldekontakt MK bleibt geschlossen. Die Relais R, R2 und R3 sind nicht aktiviert. Die Kontrollelektronik für die Thyristorenzündung ETZ1 und ETZ2 besitzen kohärente Signale. Die Überwachungsschaltungen ÜW1 und ÜW2 erkennen keine fehlerhaften Zustände. Das Bereitschaftsrelais R4 ist nach Antriebs- und Impulsfreigabe des Motors M geschlossen.

Im folgenden soll ein gestörter Betrieb bedingt durch eine fehlende Betriebsbereitschaft näher erläutert werden. Beide Stufen der Schutzvorrichtung VPM besitzen eine Spannungsversorgung, die aus der Meßspannung Umeß mit einer Amplitude von z.B. 500 V bis 800 V eine Spannung von 24 V DC/DC-Wandler erzeugt. Die Ausgangsspannungshöhe des Wandlers wird überwacht und führt im Fehlerfall zur Abschaltung der Betriebsbereitschaft über den Betriebsbereitschaftskontakt BK. Weitere, in den Spannungsbegrenzungselektroniken SBE1 und SBE2 gebildete Fehlersignale werden mit in der Überwachungsschaltung ÜW1 bzw. ÜW2 verknüpft. Ein Summenfehlersignal ΣF wird aus ÜW1 und Optokoppier OK3 mit ÜW2 gebildet. Ein solchermaßen erkannter Fehler führt zur Abschaltung des Relais R4 mit dem Kontakt K4 und damit zur Unterbrechung von Bewegungsabläufen des Motors M.

Im folgenden soll ein gestörter Betrieb, bedingt durch einen Kurzschluß, näher erläutert werden. Es liegt ein Ausfall der Antriebsregelung A, ein Netzausfall, NOT-AUS oder eine Leitungsunterbrechung an der Maschine M vor. Die Spannungsbegrenzungselektronik SBE1 oder SBE2 erkennt, daß die Motorklemmenspannung Umeß größer ist als die Auslösespannung Utr. Über die Optokoppler OK1 bzw. OK2 wird durch den gegenseitigen Informationsaustausch die noch passive Spannungsbegrenzungselektronik SBE aktiviert, beispielsweise durch Überbrücken eines Meßwiderstandes im Spannungsteiler der Triggerschaltung. Daraufhin werden die beiden Thyristoren T1 und T2 über die entsprechenden eindeutigen Signale S1 und S2 gezündet. Dies bedingt den bereits im vorangehenden geschilderten Kurzschluß der Spannung Umeß und damit der Motorklemmenspannungen über die jeweilige Diodenbrücke D1 bis D6 bzw. D7 bis D12. Zusätzlich wird das Relais R mit dem Kontakt K1 ersetzt und somit der Meldekontakt MK unterbrochen und eine Antriebssperre ausgelöst. Gleichzeitig wird der Rücksetztrigger RT aktiviert. Es folgt eine Messung des jeweiligen Thyristorstromes durch die Meßschaltungen SM1 und SM2 oder eine Kontrolle von Umeß auf Kurzschluß. Es folgt ein Vergleich der Ausgangssignale von ETZ1 und ETZ2 auf Koinzidenz. Im geschilderten Fall sind die beiden Signale kohärent. Die Relais R2 und R3 mit den Kontakten K2 und K3 bleiben geschlossen und damit die Schutzvorrichtung VPM betriebsbereit. Es folgt ein Rücksetzen des Relais R mit dem Kontakt K1 nach der Zeit t_{R} durch den Rücksetztrigger RT und damit eine Freigabe des Antriebs durch Schließen des Meldekontaktes MK.

Die Vorgang ist wiederholbar. Dabei wird die durch einen Kurzschluß entstehende Wärme im Kühlkörper K aufgenommen. Um die Leistungsbauelemente Thyristoren T1 und T2 sowie die Diodenbrücken D1 bis D6 bzw. D7 bis D12 zu schützen, unterbricht der Thermokontakt TK bei zu hoher Kühlkörpertemperatur den Meldekontakt MK und die Arbeitsmaschine wird abgeschaltet. Nach Ablauf einer Abkühlzeit schließt der Thermokontakt den Kontakt K5 wieder. Dadurch ist eine wirksame Verriegelung in Form eines thermischen Schutzes für die Leistungsbauteile gewährleistet.

Im folgenden wird eine Abschaltung bedingt durch einen Ausfall von Bauelementen näher erläutert. Im Falle eines Stromversorgungsausfalls spricht die Überwachung ÜW1 oder ÜW2 an. Das Relais R4 öffnet den Kontakt K4, wodurch die Betriebsbereitschaft unterbrochen wird. Ein Achsstart des Motors M ist nicht mehr möglich. Eine Fehlerbeseitigung läßt sich nur durch einen Austausch der Schutzvorrichtung VPM erreichen. Sollte der Betriebsbereitschaftskontakt BK nicht angeschlossen sein, so wird ein Ausfall einer Stromversorgung durch die inkohärenten Signale der Einheiten ETZ1 und ETZ2 erkannt.

In einem anderen Beispiel liegt ein ungestörter Betrieb vor. Durch einen Vergleich der Ausgänge von ETZ1 und ETZ2 wird eine negative Koinzidenz festgestellt, welche beispielsweise durch einen Bauelementeausfall in der Koinzidenzelektronik bedingt ist. An die Anschlüsse der Freigaberelais R2 und R3 mit den Kontakten K2 und K3 gelangt eine unterschiedliche Spannung, wodurch ein Strom fließt und das/oder die Relais R2, R3 gesetzt werden. Daraus resultiert eine dauerhafte Unterbrechung des Meldekontaktes MK. Die Betriebsbereitschaft kann nur durch Auswechseln der Schutzvorrichtung VPM wieder erzwungen werden.

Ein anderes Beispiel für eine Abschaltung aufgrund des Bauelementeausfalls kann darin bestehen, daß z.B. aufgrund eines Bauelementeausfalls eine der beiden Thyristorstufen T1 oder T2 nicht zündet oder ein Kanal der Koinzidenzelektronik defekt ist. Aus diesem Grund besteht keine Koinzidenz zwischen den Ausgängen von ETZ1 und ETZ2. Daher wird das Freigaberelais R2 oder R3 mit dem jeweiligen Kontakt K2 oder K3 gesetzt. Dies bedingt eine dauerhafte Unterbrechung des Meldekontaktes MK, welcher nur durch ein Auswechseln der Schutzvorrichtung VPM erzwungen werden kann.

Die in den vorangehenden Beispielen geschilderten Fehlerüberwachungen garantieren die notwendige Betriebssicherheit auch bei Bauelementeausfall in der Schutzvorrichtung VPM.

## Patentansprüche

1. Schutzeinrichtung (VPM) gegen Spannungsrückwirkung synchron permanenterregter elektrischer Antriebe, welche zwischen Antriebselektronik (A) und Motor (M) an die Motorphasen 25 (U3,V3,W3 bzw. U4,V4,W4) geschaltet ist, wobei die Schutzeinrichtung (VPM) aus der gleichgerichteten auftretenden Phasenspannung(U2,V2,W2) mit Energie (Uversorg1, Uversorg2) versorgt wird,
**dadurch gekennzeichnet, dass**
- zwei redundante Mittel (SBE1,SBE2) zur Bildung jeweils eines eindeutigen Signals (S1,S2) durch Gleichrichtung (D1...D6, D7...D12) einer auftretenden Überspannung vorgesehen sind, welche parallel zueinander geschaltet sind und die das Vorliegen einer schädlichen Spannungsrückwirkung signalisieren, wobei die beiden Mittel (SBE1,SBE2) gegenseitig Information austauschen,
- zwei redundante Mittel (T1,T2) zum Kurzschluß der Motorklemmspannung vorgesehen sind, wobei wenigstens eines der genannten Kurzschlußmittel (T1,T2) durch das jeweilige zugeordnete eindeutige Signal (S1,S2) bei Vorliegen einer schädlichen Spannungsrückwirkung ausgelöst wird und über den genannten gegenseitigen Informationsaustausch das andere Mittel (SBE1,SBE2) zur Bildung eines eindeutigen Signals (S1,S2) aktiviert wird, wodurch das andere Kurzschlußmittel (T1,T2) auslöst wird, und
- dabei ein Durchlaßwiderstand der Gleichrichtmittel (D1...D6, D7...D12) und/oder der Kurzschlußmittel (T1,T2) als Bremslast wirken.

2. Schutzeinrichtung nach Anspruch 1,
**dadurch gekennzeichnet, daß** bei Vorliegen einer schädlichen Spannungsrückwirkung jedes Kurzschlußmittel (T1,T2) bis zum Erreichen einer Motordrehzahl Null aktiviert bleibt.

3. Schutzeinrichtung nach Anspruch 1 oder 2,
**dadurch gekennzeichnet, daß** jedes Gleichrichtmittel als Drehstrom-Diodenbrücke (D1...D6, D7...D12) über die Motorphasen (U3,V3,W3 bzw. U4,V4,W4) und jedes Kurzschlußmittel als Thyristor (T1,T2) ausgestaltet ist, wobei jeder Thyristor (T1,T2) alle Motoranschlüsse über die jeweilige Drehstrom-Diodenbrücke (D1...D6, D7...D12) kurzschließt.

4. Schutzeinrichtung nach einem der Ansprüche 1 bis 3,
**dadurch gekennzeichnet, daß** zur Erkennung von Bauelementeausfällen bei Aktivierung nur eines Kurzschlußmittels (T1,T2) aufgrund einer schädlichen Spannungsrückwirkung zusätzlich ein Mittel (K2,K3) betätigt wird, durch das die Antriebsregelung unterbrochen wird.

5. Schutzeinrichtung nach Anspruch 4,
**dadurch gekennzeichnet, daß** die Antriebsregelung bis zur Beendigung des Bremsvorganges unterbrochen wird.

6. Schutzeinrichtung nach einem der Ansprüche 3 bis 5,
**dadurch gekennzeichnet, daß** zum Schutz jeder Drehstrom-Diodenbrücke (D1...D6, D7...D12) und jedes Thyristors (T1,T2) vor Überhitzung ein Thermokontakt (TK) vorgesehen ist, durch den die Antriebsregelung unterbrechbar ist.

7. Schutzeinrichtung nach einem der Ansprüche 1 bis 6,
**dadurch gekennzeichnet, daß** durch eine feste elektrische Kopplung zwischen Zwischenkreiskondensatoren (CK1,CK2) der Antriebsregelung (A) und den Motorphasen (U3,V3,W3 bzw. U4,V4,W4) bei Ausfall der Schutzeinrichtung (VPM) eine auftretende Überspannung temporär auf die Kondensator-Formatierungsspannung begrenzbar ist.

8. Schutzeinrichtung nach einem der Ansprüche 1 bis 7,
**dadurch gekennzeichnet, daß** die beiden redundanten Mittel (SBE1,SBE2) zur Bildung jeweils eines eindeutigen Signals (S1,S2) über eine bidirektionale galvanisch trennende Strecke (OK1,OK2) gegenseitig Information austauschen.

9. Schutzeinrichtung nach einem der Ansprüche 1 bis 8,
**dadurch gekennzeichnet, daß** ein zusätzliches Überwachungsmittel (ÜW1,ÜW2,&,K4)vorgesehen ist, welches bei einer Abweichung der Versorgungsspannungen (Uversorg1, Uversorg2), welche jeweils aus der über die beiden Gleichrichtmittel (D1...D6, D7...D12) gleichgerichteten auftretenden Phasenspannung (U2, V2, W2) gewonnen werden, aktiviert wird und die Antriebsregelung unterbricht.

10. Schutzeinrichtung nach einem der Ansprüche 1 bis 9,
**dadurch gekennzeichnet, daß** durch ein eindeutiges Signal (S) bei Vorliegen einer schädlichen Spannungsrückwirkung zusätzlich ein Mittel (MK) betätigt wird, durch das die Antriebsregelung unterbrochen wird.

## Claims

1. Protective device (VPM) to protect against reactive voltages of synchronously permanently excited electric drives which is connected to the motor phases (U3,V3,W3 and U4,V4,W4) between drive electronics (A) and motor (M) respectively, wherein the protective device (VPM) is supplied with energy (Uversorg1, Uversorg2) from the occurring rectified phase voltage (U2, V2, W2),
**characterised in that**
- two redundant means (SBE1,SBE2) are provided for generating in each case a unique signal (S1,S2) by rectification (D1...D6, D7...D12) of an occurring overvoltage, which means are connected in parallel to each other and signal the presence of a damaging reactive voltage, with the two means (SBE1,SBE2) mutually exchanging information,
- two redundant means (T1,T2) are provided for short-circuiting the motor terminal voltage, with at least one of the said short-circuiting means (T1,T2) being triggered by the respective associated unique signal (S1,S2) if a damaging reactive voltage is present and the other means (SBE1,SBE2) being activated by the said mutual information exchange in order to generate a unique signal (S1,S2), as a result of which the other short-circuiting means (T1,T2) is triggered, and
- with a forward resistance of the rectifying means (D1...D6, D7...D12) and/or of the short-circuiting means (T1, T2) acting as a braking load.

2. Protective device according to claim 1,
**characterised in that** when a damaging reactive voltage is present each short-circuiting means (T1, T2) remains activated until a motor rotation speed of zero is reached.

3. Protective device according to claim 1 or 2,
**characterised in that** each rectifying means is embodied as a three-phase diode bridge (D1...D6, D7...D12) across the motor phases (U3,V3,W3 and U4, V4, W4) and each short-circuiting means is embodied as a thyristor (T1, T2), with each thyristor (T1,T2) short-circuiting all motor terminals via the respective three-phase diode bridge (D1...D6, D7...D12).

4. Protective device according to one of claims 1 to 3,
**characterised in that** in order to detect component failures when only one short-circuiting means (T1,T2) is activated due to a damaging reactive voltage, a means (K2,K3) by which the drive controller is interrupted is activated in addition.

5. Protective device according to claim 4,
**characterised in that** the drive controller is interrupted until the braking operation is terminated.

6. Protective device according to one of claims 3 to 5,
**characterised in that** in order to protect each three-phase diode bridge (D1...D6, D7...D12) and each thyristor (T1, T2) against overheating, a thermocontact (TK) is provided by means of which the drive controller can be interrupted.

7. Protective device according to one of claims 1 to 6,
**characterised in that** if the protective device (VPM) fails, an occurring overvoltage can be temporarily limited to the capacitor forming voltage by means of a permanent electrical coupling between the DC link capacitors (CK1,CK2) of the drive controller (A) and the motor phases (U3,V3,W3 and U4,V4,W4).

8. Protective device according to one of claims 1 to 7,
**characterised in that** the two redundant means (SBE1,SBE2) for generating in each case a unique signal (S1, S2) mutually exchange information via a bidirectional electrically isolating path (OK1,OK2).

9. Protective device according to one of claims 1 to 8,
**characterised in that** an additional monitoring means (ÜW1, ÜW2, &, K4) is provided which is activated in the event of a deviation of the supply voltages (Uversorg1,Uversorg2), each of which is derived from the occurring phase voltage (U2, V2, W2) rectified via the two rectifying means (D1...D6, D7...D12), and interrupts the drive controller.

10. Protective device according to one of claims 1 to 9,
**characterised in that a** means (MK) by which the drive controller is interrupted is activated in addition by means of a unique signal (S) if a damaging reactive voltage is present.

## Revendications

1. Dispositif ( VPM ) de protection à l'encontre d'une réaction de tension d'entraînements électriques à excitation permanente synchrone, qui est montée entre une électronique ( A ) d'entraînement et un moteur ( M ) sur les phases 25 ( U3, V3, W3 et U4, V4, W4 ) du moteur, le dispositif ( VPM ) de protection étant alimenté en énergie ( Uversorg1, Uversorg2) à partir de la tension ( U2, V2, W2 ) de phase redressée qui se produit,
**caractérisé en ce que**
- il est prévu deux moyens ( SBE1, SBE2 ) redondants pour former respectivement un signal ( S1, S2 ) clair par redressement ( D1...D6, D4...D12 ) d'une surtension qui se produit, moyens qui sont montés en parallèle l'un avec l'autre et qui signalent la présence d'une réaction de tension néfaste, les deux moyens ( SBE1, SBE2 ) échangeant mutuellement des informations,
- il est prévu deux moyens ( T1, T2 ) redondants pour court-circuiter la tension aux bornes du moteur, au moins l'un desdits moyens ( T1, T2 ) de court-circuit étant déclenché par le signal ( S1, S2 ) clair associé respectivement en présence d'une réaction de tension néfaste et, par ledit échange d'information mutuelle, l'autre moyen ( SBE1, SBE2 ) est activé pour former un signal ( S1, S2 ) clair, grâce à quoi l'autre moyen ( T1, T2 ) de court-circuit est déclenché, et
- une résistance directe du moyen ( D1... D6..., D7... D12 ) de redressement et/ou du moyen ( T1, T2 ) de court-circuit agissant comme charge de frein.

2. Dispositif de protection selon la revendication 1, **caractérisé en ce qu'**en présence d'une réaction de tension néfaste, chaque moyen ( T1, T2 ) de court-circuit reste activé jusqu'à ce que l'on atteigne une vitesse de rotation nulle du moteur.

3. Dispositif de protection selon l'une des revendications 1 ou 2, **caractérisé en ce que** chaque moyen de redressement est constitué sous la forme d'un pont ( D1... D6, D7.... D12 ) de diodes en courant triphasé par les phases ( U3, V3, W3 et U4, V4, W4 ) du moteur et chaque moyen de court-circuit est conformé en thyristor ( T1, T2 ), chaque thyristor ( T1, T2 ) court-circuitant toutes les bornes du moteur par le pont ( D1... D6, D7... D12 ) de diodes en courant triphasé respectif.

4. Dispositif de protection selon l'une des revendications 1 à 3, **caractérisé en ce que**, pour détecter les défaillances de composants lors de l'activation de seulement un moyen ( T1, T2 ) de court-circuit en raison d'une réaction de tenison néfaste, on actionne supplémentairement un moyen ( K2, K3 ) par lequel la régulation de l'entraînement est interrompue.

5. Dispositif de protection suivant la revendication 4, **caractérisé en ce que** la régulation de l'entraînement est interrompue jusqu'à ce que l'opération de freinage soit achevée.

6. Dispositif de protection suivant l'une des revendications 3 à 5, **caractérisé en ce que** pour protéger chaque pont ( D1... D6, D7.... D12 ) de diodes en courant triphasé et chaque thyristor ( T1, T2 ) d'une surchauffe, il est prévu un thermocontact ( TK ) par lequel la régulation de l'entraînement peut être interrompue.

7. Dispositif de protection suivant l'une des revendications 1 à 6, **caractérisé en ce que**, par un couplage électrique fixe entre des condensateurs ( CK1, CK2 ) de circuit intermédiaire de la régulation ( A ) d'entraînement et les phases ( U3, V3, W3 et U4, V4, W4 ) du moteur, une surtension se produisant en cas de panne du dispositif ( VPM ) de protection peut être limitée temporairement la tension de formatation des condensateurs.

8. Dispositif de protection suivant l'une des revendications 1 à 7, **caractérisé en ce que** les deux moyens ( SBE1, SBE2 ) redondants, pour la formation de respectivement un signal ( S1, S2 ) clair, échangent mutuellement de l'information par une section ( OK1, OK2 ) directionnelle et séparée galvaniquement.

9. Dispositif de protection suivant l'une des revendications 1 à 8, **caractérisé en ce qu'**il est prévu un moyen ( ÜW1, ÜW2, &, K4 ) supplémentaire de contrôle qui, lorsque les tensions ( Uversorg1, Uversorg2 ) d'alimentation, qui sont obtenues respectivement à partir de la tension ( U2, V2, W2 ) de phase redressée par les deux moyens ( D1...D6, D7...D12 ) de redressement, présentent un écart, est activé et interrompt la régulation de l'entraînement.

10. Dispositif de protection suivant l'une des revendications 1 à 9, **caractérisé en ce que**, par un signal ( S ) clair en présence d'une réaction de tensions néfaste, un moyen ( MK ) supplémentaire est actionné, moyen par lequel la régulation d'entraînement est interrompue.
